# EUROPEAN PATENT APPLICATION

(11) **EP 4 714 983 A1**
(43) Date of publication of application: **25.03.2026**
(21) Application number: 24807110.2
(22) Date of filing: 09.05.2024
(51) Int. Cl.: C08F 2/44, C08F 290/06, C08K 3/013, C08L 71/00

(54) **PHOTOCURABLE RESIN COMPOSITION AND CURED OBJECT FORMED THEREFROM**

(30) Priority: 17.05.2023 JP 2023081354
(71) Applicant: ThreeBond Co., Ltd., Tokyo 192-0398 (JP)
(72) Inventor: OTA, Soichi, Hachioji-shi, Tokyo 192-0398 (JP); NISHIDA, Haruka, Hachioji-shi, Tokyo 192-0398 (JP); Shishiura, Ryo, Hachioji-shi, Tokyo 192-0398 (JP); KUSUYAMA, Aki, Hachioji-shi, Tokyo 192-0398 (JP); SUGIO, Takashi, Hachioji-shi, Tokyo 192-0398 (JP)
(74) Representative: Crow, Martin
(86) International application number: PCT/JP2024/017225
(87) International publication number: WO 2024/237158

(57) **Abstract**

To provide a photocurable resin composition that exhibits good workability during application and is capable of yielding a flexible cured product with a low storage modulus after curing. The photocurable resin composition of the present invention includes the following components (A) to (C): (A) a compound having one or more (meth)acryloyl groups per molecule; (B) a resin hollow particle having an inorganic filler adhered to a surface thereof, the inorganic filler being treated with a silane coupling agent having a (meth)acryloyl group; and (C) a photoinitiator.

## Description

### TECHNICAL FIELD

The present invention relates to a photocurable resin composition and a cured product thereof.

### BACKGROUND ART

Conventionally, packings and sealing agents used in automotive parts and electronic components have been required to have low elasticity (flexible properties) in view of impact and vibration resistance. Although conventional adhesives and sealing agents can achieve a certain degree of low elasticity, there is a demand for adhesives and sealing agents with even lower elasticity, with the more advanced performance of automotive parts and electronic components (JP 2004-331764 A).

### SUMMARY OF INVENTION

Known methods for achieving further lower elasticity include a method such as incorporating a large amount of a flexible filler or adding a low-viscosity plasticizer into a composition used as adhesives and sealing agents. However, increasing the filler content is accompanied by a rise in the viscosity of the composition, causing a significant decrease in workability. Using low-viscosity plasticizers poses a problem of bleeding over time, making it difficult to achieve both workability during using the composition and low elasticity of the cured product.

Accordingly, the present invention has been made in the above circumstances and an object of the present invention is to provide a photocurable resin composition that exhibits excellent workability during application and enables the production of a cured product with low elasticity (flexibility). Another object of the present invention is to provide a photocurable resin composition that excels in thick-film curability.

The present inventors have conducted intensive studies to solve the above problems and found that the photocurable resin composition detailed below can yield a cured product with even more superior low elasticity while still excelling in workability during application, thereby completing the present invention.

Specifically, the aforementioned objects can be achieved by the present invention having the following feature, and the present invention encompasses the following aspects and embodiments.
[1] A photocurable resin composition containing components (A) to (C) below:
   (A) a compound having one or more (meth)acryloyl groups per molecule;
   (B) a resin hollow particle having an inorganic filler adhered to a surface thereof, the inorganic filler being treated with a silane coupling agent having a (meth)acryloyl group; and
   (C) a photoinitiator;
[2] The photocurable resin composition according to [1], wherein the component (A) contains a monofunctional oligomer;
[3] The photocurable resin composition according to [1] or [2], wherein the component (A)contains a (meth)acrylic monomer;
[4] The photocurable resin composition according to any one of [1] to [3], wherein in the component (B), the inorganic filler (the inorganic filler contained in the component (B)) is talc.
[5] The photocurable resin composition according to any one of [1] to [4], wherein in the component (B), the silane coupling agent is at least one compound selected from the group consisting of 3-methacryloxypropyltrimethoxysilane, 3-methacryloxypropyltriethoxysilane, and 3-acryloxypropyltrimethoxysilane;
[6] The photocurable resin composition according to any one of [1] to [5], further containing a plasticizer as component (D);
[7] The photocurable resin composition according to any one of [1] to [6], further containing an inorganic filler different from the inorganic filler adhered to the surface of the resin hollow particle of the component (B), as component (E);
[8] The photocurable resin composition according to any one of [1] to [7], wherein the component (A) contains a monofunctional oligomer, a monofunctional (meth)acrylate monomer, and a polyfunctional (meth)acrylate monomer;
[9] The photocurable resin composition according to [8], wherein the polyfunctional (meth)acrylate monomer contains a penta-functional (meth)acrylate monomer and/or a hexa-functional (meth)acrylate monomer;
[10] The photocurable resin composition according to any one of [1] to [9], wherein the component (A) contains a monofunctional urethane-modified (meth)acrylate oligomer having a polyether skeleton;
[11] The photocurable resin composition according to any one of [1] to [10], wherein the component (A) contains a polyfunctional (meth)acrylate monomer, and a content of the polyfunctional (meth)acrylate monomer is 0.1 to 5% by mass based on a total mass of the component (A);
[12] The photocurable resin composition according to any one of [1] to [11], wherein in the component (B), the silane coupling agent has an ethoxy group;
[13] The photocurable resin composition according to any one of [1] to [12], further containing a dispersant as component (F);
[14] The photocurable resin composition according to any one of [1] to [13], which consists essentially of:
   the components (A) to (C);
   a plasticizer as component (D);
   an inorganic filler different from the inorganic filler adhered to the surface of the resin hollow particle of the component (B), as component (E); and
   a dispersant as component (F);
[15] The photocurable resin composition according to any one of [1] to [14], which is substantially free of a polyfunctional (meth)acrylate oligomer;
[16] A cured product of the photocurable resin composition according to any one of [1] to [15];
[17] The cured product according to [16], which is obtained by curing the photocurable resin composition with an integrated light quantity of 30 kJ/m², and has a storage modulus at 25°C of 260,000 Pa or less.

### DESCRIPTION OF EMBODIMENTS

Hereinafter, the embodiments of the present invention will be described. It should be noted that the present invention is not limited to the following embodiments only and can be variously modified within the scope of the claims. Furthermore, the embodiments described herein may be combined arbitrarily to form other embodiments.

Throughout the present description, expressions of a singular form should be understood to include the concept of a plural form thereof, unless otherwise specified. Thus, singular articles (for example, "a", "an", and "the" in English) should be understood to include the concept of their plural forms unless otherwise specified. Furthermore, the terms used in the present description should be understood in the sense commonly used in the relevant field, unless otherwise specified. Accordingly, unless otherwise defined, all technical and scientific terms used herein have the same meaning as commonly understood by those skilled in the art related to the present invention. In case of a conflict, the present description (including definitions) takes precedence. In the present description, "X to Y" refers to a range that includes the numerical values of both ends (X and Y) as the lower and upper limits, meaning "X or more and Y or less". Furthermore, concentration and % shall represent mass concentration and % by mass, respectively, unless otherwise specified, and a ratio shall represent a mass ratio unless otherwise specified. Unless otherwise specified, procedures and measurements of physical properties or the like are conducted under conditions of room temperature (20-25°C) and relative humidity 40-55% RH. "A and/or B" means including each of A and B, and combinations thereof.

The (meth)acryloyl group as used herein may be contained, in the compound, in the form of a (meth)acryloyloxy group. The term "(meth)acryloyl" includes both acryloyl and methacryloyl. Thus, for example, the term "(meth)acryloyl group" includes both the acryloyl group (H₂C=CH-C(=O)-) and the methacryloyl group (H₂C=C(CH₃)-C(=O)-). Similarly, the term "(meth)acrylate" includes both acrylate and methacrylate, the term "(meth)acryl" includes both acryl and methacryl, and the term "(meth)acrylamide" includes both acrylamide and methacrylamide.

### <Photocurable resin composition>

One aspect of the present invention provides a photocurable resin composition including components (A) to (C) below:
(A) a compound having one or more (meth)acryloyl groups per molecule;
(B) a resin hollow particle having an inorganic filler adhered to a surface thereof, the inorganic filler being treated with a silane coupling agent having a (meth)acryloyl group; and
(C) a photoinitiator.

Hereinafter, the photocurable resin composition having the above-mentioned feature is simply referred to as "the photocurable resin composition according to the present invention" or simply "the composition". Furthermore, the component (A) having the above-mentioned feature is also referred to simply as "the component (A) of the present invention" or simply as "the component (A)". Similarly, the component (B) having the above-mentioned feature is also referred to simply as "the component (B) of the present invention" or simply as "the component (B)". Furthermore, the component (C) having the above-mentioned feature is also referred to simply as "the component (C) of the present invention" or simply as "the component (C)".

The photocurable resin composition according to the present invention excels in workability during application (it has high consistency and excellent smoothness of the coating film). Moreover, the cured product thereof excels in low elasticity (it has low storage modulus). Consequently, the photocurable resin composition and a cured product thereof according to the present invention are very useful as a cushioning material for components or parts (i.e., adherends) subjected to stress.

### <Component (A)>

Component (A) of the present invention is a compound having one or more (meth)acryloyl groups per molecule (in one molecule). The component (A) is a key component that achieves low elasticity when combined with component (B) described later. Examples of the component (A) include a (meth)acrylic monomer having one or more (meth)acryloyl groups per molecule (in one molecule), and an oligomer having one or more (meth)acryloyl groups per molecule (in one molecule). In the present invention, the term "oligomer" refers to a polymer which generally contain 2 to several tens of repeated monomer units and which has a weight-average molecular weight of 1,000 or more. It should be noted that the weight average molecular weight as used herein refers to a value calculated using the standard polystyrene conversion method with size exclusion chromatography (SEC).

The component (A) of the present invention preferably contains both an oligomer and a monomer in view of achieving curability and low elasticity. When both oligomer and monomer are contained, the mass ratio of oligomer to monomer (oligomer : monomer) is preferably 8 : 2 to 2 : 8, more preferably 7 : 3 to 3 : 7, and most preferably 6 : 4 to 4 : 6.

### (Oligomer having one or more (meth)acryloyl groups)

Examples of the oligomer having one or more (meth)acryloyl groups include urethane-modified (meth)acrylate and epoxy-modified (meth)acrylate.

The urethane-modified (meth)acrylate is a compound that has a urethane bond in its main chain formed by reacting an isocyanate group with a hydroxyl group and also has a (meth)acryloyl group. That is, the urethane-modified (meth)acrylate refers to a (meth)acrylic acid ester having a urethane bond. The position of the (meth)acryloyl group in the urethane-modified (meth)acrylate is not particularly limited; it may be at the end of the molecular chain, in the side chain, or in both. In view of curability, it is preferable that the (meth)acryloyl group be at the end of the molecular chain.

The urethane-modified (meth)acrylate used as the component (A) may be either a synthesized one or a commercially available one. Examples of the method for producing urethane-modified (meth)acrylate include a method of reacting a polyol compound having a hydroxyl group with a (meth)acrylate having an isocyanate group and a method of reacting a polyol compound having a hydroxyl group, a polyisocyanate compound and a (meth)acrylate having a hydroxyl group.

Examples of the polyol compound having a hydroxyl group that constitutes the urethane-modified (meth)acrylate include, but are not particularly limited to, a polyester polyol, a polycarbonate polyol, and a polyether polyol. The number of repeating units of alkylene oxide contained in the polyether polyol is not particularly limited, but is preferably 5 to 100, more preferably 10 to 80, and particularly preferably 30 to 70, in view of low elasticity.

Examples of the (meth)acrylate having an isocyanate group that constitutes the urethane-modified (meth)acrylate include, but are not limited to, 2-isocyanatoethyl methacrylate, 3-isocyanatopropyl methacrylate, and 2-isocyanatoethyl acrylate. These can be used singly or in combination of two or more.

Examples of the polyisocyanate compound constituting the urethane-modified (meth)acrylate include aromatic polyisocyanates such as 2,4-tolylene diisocyanate, 2,6-tolylene diisocyanate, 1,3-xylylene diisocyanate, 1,4-xylylene diisocyanate, tetramethyl xylylene diisocyanate, diphenylmethane diisocyanate, naphthalene-1,5-diisocyanate, and triphenylmethane triisocyanate; alicyclic polyisocyanates such as isophorone diisocyanate, bis(4-isocyanatocyclohexyl)methane, 1,3-bis(isocyanatomethyl)cyclohexane, 1,4-bis(isocyanatomethyl)cyclohexane, norbornane diisocyanate, bicycloheptane triisocyanate; and linear or branched aliphatic polyisocyanates such as hexamethylene diisocyanate, 1,3,6-hexamethylene triisocyanate, and 1,6,11-undecamethylene triisocyanate. Among them, in view of obtaining a cured product with low elasticity, the polyisocyanate compound is preferably selected from linear or branched aliphatic polyisocyanates and alicyclic polyisocyanates. These can be used singly or in combination of two or more.

Examples of the (meth)acrylate having a hydroxyl group constituting the urethane-modified (meth)acrylate include, but are not particularly limited to 2-hydroxyethyl (meth)acrylate, 2-hydroxypropyl (meth)acrylate, 2-hydroxybutyl (meth)acrylate, 4-hydroxycyclohexyl (meth)acrylate, 1,6-hexanediol mono(meth)acrylate, neopentyl glycol mono(meth)acrylate, (poly)ethylene glycol mono(meth)acrylate, (poly)propylene glycol mono(meth)acrylate, and pentaerythritol tri(meth)acrylate. In view of obtaining a cured product with low elasticity, 2-hydroxyethyl (meth)acrylate, 2-hydroxypropyl (meth)acrylate, 2-hydroxybutyl (meth)acrylate, and 4-hydroxycyclohexyl (meth)acrylate are preferred. These can be used singly or in combination of two or more.

The epoxy-modified (meth)acrylate is a compound that can be synthesized by ring-opening polymerization of a glycidyl group of a glycidyl ether compound with an acrylic acid or the like, but the synthesis method is not limited to this method. As a main chain of the glycidyl ether compound, various skeletons such as bisphenol A type, bisphenol F type, phenol novolac type, hydrogenated bisphenol A type, and hydrogenated bisphenol F type can be used. These can be used singly or in combination of two or more.

When the component (A) contains an oligomer having a (meth)acryloyl group, it is preferable that the weight average molecular weight of the oligomer be 1,000 to 300,000, more preferably 3,000 to 50,000, and most preferably 5,000 to 40,000 in view of good photocurability of the composition and obtaining a cured product with low elasticity. It should be noted that the weight average molecular weight in the present description refers to a value calculated using the standard polystyrene conversion method with size exclusion chromatography (SEC).

The oligomer may be a monofunctional oligomer having one (meth)acryloyl group per molecule (monofunctional (meth)acrylate oligomer) or may be a polyfunctional oligomer having two or more (meth)acryloyl groups per molecule (polyfunctional (meth)acrylate oligomer).

In view of obtaining a cured product with low elasticity, it is preferable that the component (A) contain a monofunctional oligomer having one (meth)acryloyl group per molecule (monofunctional (meth)acrylate oligomer), more preferably contain a monofunctional urethane-modified (meth)acrylate oligomer.

The monofunctional urethane-modified (meth)acrylate may contain a structure other than the urethane bond and the (meth)acryloyl group, such as a polyester skeleton, polycaprolactone skeleton, polycarbonate skeleton, or polyether skeleton. Only one type of these skeletons may be contained or a combination of two or more types of these skeletons may be contained per molecule. Among these, monofunctional urethane-modified (meth)acrylates having a polyether skeleton (polyether-based monofunctional urethane-modified (meth)acrylates) are preferred in view of further enhancing the intended effects. It should be noted that the term "polyether skeleton" as used herein refers to a skeleton having repeating units of alkylene oxide such as polyethylene oxide, polypropylene oxide, or polybutylene oxide. In other words, in view of further enhancing the intended effects, it is preferable that the component (A) contain a monofunctional urethane-modified (meth)acrylate oligomer having a polyether skeleton (polyether-based monofunctional urethane-modified (meth)acrylate oligomer).

### ((Meth)acrylic monomer having one or more (meth)acryloyl groups)

Examples of the monomer having one or more (meth)acryloyl groups ((meth)acrylic monomer) include a monofunctional (meth)acrylic monomer having one (meth)acryloyl group per molecule (preferably, monofunctional (meth)acrylate monomer), and a polyfunctional (meth)acrylic monomer having two or more (meth)acryloyl groups per molecule (preferably, polyfunctional (meth)acrylate monomer).

The (meth)acrylic monomer may contain a structure other than (meth)acryloyl groups. As such a structure, the (meth)acrylic monomer preferably has an alkylene oxide skeleton (-RO-), in view of further enhancing the intended effects. Here, R may be an alkylene group, a cycloalkylene group, an alkenylene group, an alkynylene group, an arylene group, or a heteroarylene group. When multiple alkylene oxide skeletons are present per molecule, R groups constituting the alkylene oxide skeletons may be the same or different from each other. Among them, R is preferably an alkylene group. The number of carbons constituting the alkylene group is not particularly limited, but is preferably 1 to 10, more preferably 2 to 5, particularly preferably 2 or 3, and most preferably 2. That is, it is preferable that the (meth)acrylic monomer have an ethylene oxide skeleton. The number of repeating units of the above alkylene oxide skeleton (-RO-; R represents an alkylene group) contained in the (meth)acrylic monomer (preferably, monofunctional (meth)acrylic monomer) is not particularly limited, but for example, 1 to 100, preferably 2 to 30, more preferably 2 to 10, particularly preferably 2 to 7, and most preferably 2 to 5.

The molecular weight of the (meth)acrylic monomer is not particularly limited, but is preferably less than 1,000, more preferably 600 or less. The molecular weight may be 300 or less. The molecular weight of the (meth)acrylic monomer is preferably more than 100, more preferably 130 or more. It should be noted that, in the present description, the molecular weight of a compound (low molecular weight compound) can be measured using known methods such as gas chromatography-mass spectrometry (GC-MS). When it is not possible to measure using such methods, the structure of the compound may be identified using methods such as NMR, and the molecular weight may be determined by performing calculations based on the structure.

The monofunctional (meth)acrylic monomer is preferably a monofunctional (meth)acrylate monomer. Examples of the monofunctional (meth)acrylate monomer include methoxy diethylene glycol mono(meth)acrylate, methoxy triethylene glycol mono(meth)acrylate, methoxy tetraethylene glycol mono(meth)acrylate, methoxy pentaethylene glycol mono(meth)acrylate, methoxy hexaethylene glycol mono(meth)acrylate, methoxy heptaethylene glycol mono(meth)acrylate, methoxy hectaethylene glycol mono(meth)acrylate, methoxy octaethylene glycol mono(meth)acrylate, methoxy nonaethylene glycol mono(meth)acrylate, methoxy decaethylene glycol mono(meth)acrylate, methoxy tripropylene glycol mono(meth)acrylate, methoxy tetrapropylene glycol mono(meth)acrylate, methoxy pentapropylene glycol mono(meth)acrylate, methoxy hexapropylene glycol mono(meth)acrylate, methoxy heptapropylene glycol mono(meth)acrylate, methoxy hectapropylene glycol mono(meth)acrylate, methoxy octapropylene glycol mono(meth)acrylate, methoxy nonapropylene glycol mono(meth)acrylate, methoxy decapropylene glycol mono(meth)acrylate, methoxy tributylene glycol mono(meth)acrylate, methoxy tetrabutylene glycol mono(meth)acrylate, methoxy pentabutylene glycol mono(meth)acrylate, methoxy hexabutylene glycol mono(meth)acrylate, methoxy heptabutylene glycol mono(meth)acrylate, methoxy hectabutylene glycol mono(meth)acrylate, methoxy octabutylene glycol mono(meth)acrylate, methoxy nonabutylene glycol mono(meth)acrylate, methoxy decabutylene glycol mono(meth)acrylate, ethoxy diethylene glycol mono(meth)acrylate, ethoxy triethylene glycol mono(meth)acrylate, ethoxy tetraethylene glycol mono(meth)acrylate, ethoxy pentaethylene glycol mono(meth)acrylate, ethoxy hexaethylene glycol mono(meth)acrylate, ethoxy heptaethylene glycol mono(meth)acrylate, ethoxy hectaethylene glycol mono(meth)acrylate, ethoxy octaethylene glycol mono(meth)acrylate, ethoxy nonaethylene glycol mono(meth)acrylate, ethoxy decaethylene glycol mono(meth)acrylate, ethoxy tripropylene glycol mono(meth)acrylate, ethoxy tetrapropylene glycol mono(meth)acrylate, ethoxy pentapropylene glycol mono(meth)acrylate, ethoxy hexapropylene glycol mono(meth)acrylate, ethoxy heptapropylene glycol mono(meth)acrylate, ethoxy hectapropylene glycol mono(meth)acrylate, ethoxy octapropylene glycol mono(meth)acrylate, ethoxy nonapropylene glycol mono(meth)acrylate, ethoxy decapropylene glycol mono(meth)acrylate, ethoxy tributylene glycol mono(meth)acrylate, ethoxy tetrabutylene glycol mono(meth)acrylate, ethoxy pentabutylene glycol mono(meth)acrylate, ethoxy hexabutylene glycol mono(meth)acrylate, ethoxy heptabutylene glycol mono(meth)acrylate, ethoxy hectabutylene glycol mono(meth)acrylate, ethoxy octabutylene glycol mono(meth)acrylate, ethoxy nonabutylene glycol mono(meth)acrylate, and ethoxy decabutylene glycol mono(meth)acrylate. Among them, the monofunctional (meth)acrylate monomer contained as the component (A) is preferably an aliphatic (meth)acrylate that does not have an aromatic ring or cycloaliphatic ring in the molecule, and more preferably an aliphatic (meth)acrylate having an alkylene oxide skeleton, in view of obtaining the cured product with low elasticity. It is further preferable that the monofunctional (meth)acrylate monomer contain at least one selected from the group consisting of ethoxy diethylene glycol mono(meth)acrylate, ethoxy triethylene glycol mono(meth)acrylate, ethoxy tetraethylene glycol mono(meth)acrylate, ethoxy pentaethylene glycol mono(meth)acrylate, ethoxy hexaethylene glycol mono(meth)acrylate, ethoxy heptaethylene glycol mono(meth)acrylate, ethoxy octaethylene glycol mono(meth)acrylate, ethoxy nonaethylene glycol mono(meth)acrylate, ethoxy decaethylene glycol mono(meth)acrylate, ethoxy hectaethylene glycol mono(meth)acrylate, ethoxy tripropylene glycol mono(meth)acrylate, ethoxy tetrapropylene glycol mono(meth)acrylate, ethoxy pentapropylene glycol mono(meth)acrylate, ethoxy hexapropylene glycol mono(meth)acrylate, ethoxy heptapropylene glycol mono(meth)acrylate, ethoxy octapropylene glycol mono(meth)acrylate, ethoxy nonapropylene glycol mono(meth)acrylate, ethoxy decapropylene glycol mono(meth)acrylate, ethoxy hectapropylene glycol mono(meth)acrylate, ethoxy tributylene glycol mono(meth)acrylate, ethoxy tetrabutylene glycol mono(meth)acrylate, ethoxy pentabutylene glycol mono(meth)acrylate, ethoxy hexabutylene glycol mono(meth)acrylate, ethoxy heptabutylene glycol mono(meth)acrylate, ethoxy octabutylene glycol mono(meth)acrylate, ethoxy nonabutylene glycol mono(meth)acrylate, ethoxy decabutylene glycol mono(meth)acrylate, and ethoxy hectabutylene glycol mono(meth)acrylate, and particularly preferable that the monofunctional (meth)acrylate monomer contains at least one selected from the group consisting of ethoxy diethylene glycol mono(meth)acrylate, ethoxy triethylene glycol mono(meth)acrylate, ethoxy tetraethylene glycol mono(meth)acrylate, ethoxy pentaethylene glycol mono(meth)acrylate, and ethoxy hexaethylene glycol mono(meth)acrylate. These monomers can be used singly or in combination of two or more.

The polyfunctional (meth)acrylic monomer is preferably a polyfunctional (meth)acrylate monomer. As the polyfunctional (meth)acrylate monomer, a polyfunctional (meth)acrylate monomer with two or more functional groups can be used. The number of (meth)acryloyl groups contained in the polyfunctional (meth)acrylate monomer is not particularly limited as long as it is two or more. However, in view of reducing the integrated light quantity required to achieve a sufficient curing rate, it is preferably 3 or more (tri-functional or more), more preferably 4 or more (tetra-functional or more), and particularly preferably 5 or more (penta-functional or more). There is no particular limitation on the upper limit of the number of (meth)acryloyl groups, but it is, for example, 8 or less (octa-functional or less).

Examples of the polyfunctional (meth)acrylate monomer include a tetra-functional (meth)acrylate monomer such as ditrimethylolpropane tetra(meth)acrylate and pentaerythritol tetra(meth)acrylate; a penta-functional (meth)acrylate monomer such as dipentaerythritol monohydroxy penta(meth)acrylate and alkyl-modified dipentaerythritol penta(meth)acrylate; and a hexa-functional (meth)acrylate monomer such as dipentaerythritol hexa(meth)acrylate. Among them, a penta-functional (meth)acrylate monomer and/or a hexa-functional (meth)acrylate monomer is preferably contained as the polyfunctional (meth)acrylate monomer, and at least one selected from the group consisting of dipentaerythritol monohydroxypenta(meth)acrylate, alkyl-modified dipentaerythritol penta(meth)acrylate, and dipentaerythritol hexa(meth)acrylate is more preferably included. These monomers can be used singly or in combination of two or more. In a preferred embodiment, the polyfunctional (meth)acrylate monomer included in the component (A) contains a penta-functional (meth)acrylate monomer and a hexa-functional (meth)acrylate monomer. In a more preferred embodiment, the aforementioned polyfunctional (meth)acrylate monomer contains at least one selected from the group consisting of dipentaerythritol monohydroxy penta(meth)acrylate and alkyl-modified dipentaerythritol penta(meth)acrylate, and dipentaerythritol hexa(meth)acrylate. In a further preferred embodiment, the aforementioned polyfunctional (meth)acrylate monomer contains at least one monomer selected from dipentaerythritol monohydroxy penta(meth)acrylate, and at least one monomer selected from dipentaerythritol hexa(meth)acrylate. In the most preferred embodiment, the aforementioned polyfunctional (meth)acrylate monomer is at least one monomer selected from dipentaerythritol monohydroxy penta(meth)acrylate and at least one monomer selected from dipentaerythritol hexa(meth)acrylate.

### (Preferred embodiments)

Hereinafter, the preferred embodiment of the component (A) is further described in detail.

In view of achieving a photocurable resin composition with thick-film curability and excellent low elasticity of a cured product, the component (A) preferably contains a (meth)acrylic monomer in addition to a monofunctional oligomer (monofunctional (meth)acrylate oligomer). Furthermore, from the same viewpoint, it is preferable that the component (A) contain both a monofunctional (meth)acrylic monomer and a polyfunctional (meth)acrylic monomer, in addition to a monofunctional oligomer (mono-functional (meth)acrylate oligomer). The contents (mass ratio) of the monofunctional (meth)acrylic monomer and the polyfunctional (meth)acrylic monomer is preferably in the following range. Specifically, the component (A) preferably contains 0.1 to 30 parts by mass of a polyfunctional (meth)acrylic monomer relative to 100 parts by mass of a monofunctional (meth)acrylic monomer, more preferably 1 to 20 parts by mass, particularly preferably 2 to 10 parts by mass, and most preferably 5 to 8 parts by mass.

Furthermore, in view of more easily achieving the intended effects, it is preferable that the component (A) contain both a monofunctional (meth)acrylate monomer and a polyfunctional (meth)acrylate monomer, in addition to a monofunctional oligomer (mono-functional (meth)acrylate oligomer). That is, in a preferred embodiment, the component (A)contains a monofunctional oligomer (monofunctional (meth)acrylate oligomer), a monofunctional (meth)acrylate monomer, and a polyfunctional (meth)acrylate monomer. In this case, the contents (mass ratio) of the monofunctional (meth)acrylate monomer and the polyfunctional (meth)acrylate monomer is preferably within the following range. Specifically, the component (A) preferably contains 0.1 to 30 parts by mass of a polyfunctional (meth)acrylate monomer relative to 100 parts by mass of a monofunctional (meth)acrylate monomer, more preferably 1 to 20 parts by mass, particularly preferably 2 to 10 parts by mass, and most preferably 5 to 8 parts by mass.

In addition to the above, the total mass of the monofunctional (meth)acrylate monomer and the polyfunctional (meth)acrylate monomer (total mass of (meth)acrylate monomers) in the component (A) is preferably 25 to 100 parts by mass relative to 100 parts by mass of the monofunctional oligomer (monofunctional (meth)acrylate oligomer), more preferably 40 to 90 parts by mass, further preferably 60 to 85 parts by mass, and particularly preferably 65 to 80 parts by mass.

The content of the polyfunctional (meth)acrylate monomer is preferably 0.1 to 5% by mass, more preferably 0.1 to 4% by mass, and particularly preferably 0.1 to 3% by mass based on the total mass of the component (A) (regarding the total mass of the component (A) as 100% by mass). When the content of the polyfunctional (meth)acrylate monomer is 0.1% by mass or more, the thick-film curability can be improved, and when the content of the polyfunctional (meth)acrylate monomer is 5% by mass or less, it is easier to maintain the elasticity of the cured product low. In view of further maintaining low elasticity, the content of polyfunctional (meth)acrylate oligomers having two or more (meth)acryloyl groups per molecule is preferably 0 to 10% by mass, more preferably 0 to 5% by mass, based on the total mass of the component (A) (regarding the total mass of the component (A) as 100% by mass). Furthermore, it is most preferable that the photocurable resin composition according to the present invention is substantially free of the polyfunctional (meth)acrylate oligomer. The term "substantially free" herein refers to a case where the content of the aforementioned polyfunctional (meth)acrylate oligomer is less than 0.01% by mass based on the entire photocurable resin composition. That is to say, in one embodiment of the present invention, the content of the polyfunctional (meth)acrylate oligomer is less than 0.01% by mass (lower limit: 0% by mass) based on 100% by mass of the total mass of the photocurable resin composition (relative to the photocurable resin composition).

The content of the component (A) in the photocurable resin composition is not particularly limited. However, it is preferably 50 to 90 parts by mass relative to 100 parts by mass of the total mass of the photocurable resin composition, more preferably 55 to 80 parts by mass, and most preferably 60 to 70 parts by mass. The compounds as the component (A) may be used singly or in combination of two or more. It should be noted that when two or more types are used together, the content of the component (A) refers to the total amount.

In view of more easily achieving the intended effects, it is preferable in each of the above embodiments that both the monofunctional oligomer (monofunctional (meth)acrylate oligomer) and the monofunctional (meth)acrylic monomer (preferably, monofunctional (meth)acrylate monomer) included in the component (A) have an alkylene oxide skeleton. Furthermore, it is preferable that the monofunctional oligomer (monofunctional (meth)acrylate oligomer), the monofunctional (meth)acrylic monomer (preferably, monofunctional (meth)acrylate monomer), and the polyfunctional (meth)acrylic monomer (preferably, polyfunctional (meth)acrylate monomer) included in the component (A) all have an alkylene oxide skeleton.

In each of the above embodiments, the monofunctional oligomer is preferably a monofunctional urethane-modified (meth)acrylate oligomer having a polyether skeleton. Furthermore, in view of excellent curability with ultraviolet light, the (meth)acryloyl group contained in the component (A) is preferably an acryloyl group.

### <Component (B)>

Component (B) of the present invention is a resin hollow particle (hollow resin filler) having an inorganic filler adhered to a surface thereof, in which the inorganic filler is surface-treated with a silane coupling agent having a (meth)acryloyl group. In the present description, the resin hollow particles having the above feature may simply be referred to as "resin hollow particle as the component (B)". The term "resin hollow particle" herein refers to a particle having a hollow body, which has a hollow portion, and formed of a resin. The resin hollow particle may have a single-pored structure (mononuclear structure) or a multi-pored structure (polynuclear structure).

Inorganic filler constituting the component (B) is surface-treated with a silane coupling agent having a (meth)acryloyl group. Since the surface is treated with a silane coupling agent having a (meth)acryloyl group, the change in viscosity over time of the photocurable resin composition, which is due to the addition of the component (B), is suppressed, resulting in a smooth coating film after application, and the cured product can exhibit excellent low elasticity. In other words, by containing the component (B), the photocurable resin composition according to the present invention exhibits good workability during application, and a cured product thereof has low elasticity. Although the details of the mechanism by which such effects are obtained are unclear but is presumed to be as follows:
When resin hollow particles alone (without the inorganic filler adhered to their surface) are mixed with the component (A), the dispersibility of the resin hollow particles in the composition is poor, resulting in difficulty in blending. As a result, there is a concern about the formation of irregularities (reduction in flatness) on the coating film surface and the change in viscosity of the photocurable resin composition over time. In contrast, resin hollow particle as the component (B) has, on its surface, an inorganic filler which is surface-treated with the silane coupling agent described above, thereby exhibiting excellent dispersibility in the photocurable resin composition. Thus, it is possible to suppress the formation of irregularities (reduction in flatness) on the coating film surface and the change in viscosity of the composition over time, which are due to insufficient dispersibility of inorganic fillers and resin hollow particles in the composition, and the workability during application of the composition is thus improved. Furthermore, the resulting cured product can exhibit low elasticity. More specifically, the following is presumed: during the curing of the composition, (meth)acryloyl groups present on the surface of the inorganic filler polymerize together with the component (A) or are incorporated into a polymer of the component (A), so that the resin hollow particles become more compatible with the component (A) alongside the inorganic filler; and thereby, the dispersibility of these components (dispersibility in the composition) is improved, resulting in achieving the aforementioned effect. On the other hand, if the inorganic filler present on the surface of the resin hollow particles is not treated with a silane coupling agent having a (meth)acryloyl group, the dispersibility of the inorganic filler and resin hollow particles in the composition decreases, resulting in reduced smoothness of the coating film to be formed (see Comparative Examples 1 to 4 described later). Additionally, the cured product to be obtained has a high storage modulus, thereby failing to achieve low elasticity.

Additionally, the resin hollow particles included as the component (B) can act like a cushioning material due to their hollow portion, thereby exhibiting stress relaxation effects. As a result, the storage modulus of the cured product to be obtained can be further lowered.

Furthermore, in the resin hollow particles as the component (B) of the present invention, the refractive index is different between the hollow portion (gas) and the resin forming the particles, and accordingly, the incident light (active energy rays) is prone to scattering during curing. It is considered that as a result, light (active energy rays) can more easily penetrate the interior of the coating film, and that thus the thick-film curability is also improved. It should be noted that the above mechanism is based on speculation and does not affect the technical scope of the present invention regardless of its correctness.

It should be noted that the inclusion of the resin hollow particles having the inorganic filler adhered to their surface in the photocurable resin composition can be confirmed by performing scanning electron microscopy energy dispersive X-ray spectroscopy (SEM-EDS) analysis on the particles obtained by dispersing the photocurable resin composition in a solvent and separating the resin hollow particles.

The silane coupling agent having a (meth)acryloyl group used in the surface treatment of inorganic filler (referred to herein simply as "silane coupling agent in the component (B)" or simply as "silane coupling agent") preferably has an alkoxy group in addition to the (meth)acryloyl group. The alkoxy group contained in the silane coupling agent may be either linear or branched, and preferable examples include a linear alkoxy group having 1 to 20 carbon atoms or a branched alkoxy group having 3 to 20 carbon atoms. Examples of the alkoxy group include a methoxy group, an ethoxy group, a propoxy group, an isopropoxy group, a butoxy group, a pentyloxy group, a hexyloxy group, a heptyloxy group, an octyloxy group, a nonyloxy group, a decyloxy group, an undecyloxy group, a dodecyloxy group, a tridecyloxy group, a tetradecyloxy group, a pentadecyloxy group, a hexadecyloxy group, a heptadecyloxy group, an octadecyloxy group, a 2-ethylhexyloxy group, and a 3-ethylpentyloxy group. Among these, the alkoxy group is preferably a linear alkoxy group having 1 to 10 carbon atoms, more preferably a linear alkoxy group having 1 to 5 carbon atoms, further preferably a methoxy group or an ethoxy group, and particularly preferably an ethoxy group.

The number of alkoxy groups contained in the silane coupling agent in the component (B) is not particularly limited, but preferably 1 to 5, more preferably 2 to 4, and most preferably 3.

Specific examples of the silane coupling agent in the component (B) include 3-methacryloxypropylmethyldiethoxysilane, 3-methacryloxypropyltriethoxysilane, 3-methacryloxypropylmethyldimethoxysilane, 3-methacryloxypropyltrimethoxysilane, and 3-acryloxypropyltrimethoxysilane. These can be used singly or in combination of two or more. In view of obtaining a cured product with excellent low elasticity, 3-methacryloxypropylmethyldiethoxysilane, 3-methacryloxypropyltriethoxysilane, 3-methacryloxypropyltrimethoxysilane, and 3-acryloxypropyltrimethoxysilane are preferred, and 3-methacryloxypropyltriethoxysilane, 3-methacryloxypropyltrimethoxysilane, and 3-acryloxypropyltrimethoxysilane are more preferred. In other words, in a preferred embodiment, the silane coupling agent in the component (B) is at least one compound selected from the group consisting of 3-methacryloxypropyltrimethoxysilane, 3-methacryloxypropyltriethoxysilane, and 3-acryloxypropyltrimethoxysilane. Furthermore, in a more preferred embodiment, the silane coupling agent in the component (B) is 3-methacryloxypropyltrimethoxysilane or 3-methacryloxypropyltriethoxysilane. Furthermore, in a more preferred embodiment, the silane coupling agent in the component (B) is 3-methacryloxypropyltriethoxysilane.

There is no particular limitation on resin constituting the resin hollow particle of the component (B), but preferably, it is a thermoplastic resin, and more preferably, a polymer (homopolymer) of at least one monomer selected from the group consisting of vinylidene chloride, acrylonitrile, methacrylonitrile, acrylic acid ester, and methacrylic acid ester, or a copolymer of two or more monomers selected from these. These resins may be used singly or in combination of two or more. In view of the toughness of resin hollow particles, the resin constituting the resin hollow particles is preferably a polymer containing acrylonitrile as a constituent unit (polyacrylonitrile resin) or copolymer containing acrylonitrile as a constituent unit, and more preferably a copolymer containing acrylonitrile as a constituent unit.

Specific examples of the inorganic filler constituting the component (B) include minerals such as limestone (heavy calcium carbonate), quartz, silica, wollastonite, gypsum, asbestos, apatite, magnetite, zeolite, clay (montmorillonite, saponite, hectorite, beidellite, stevensite, nontronite, vermiculite, halloysite, talc, mica, or the like); metals from groups 1 to 16 in the periodic table (such as zinc, aluminum, molybdenum, tungsten, zirconium, barium, manganese, cobalt, calcium, gold, silver, chromium, titanium, iron, platinum, copper, lead, and nickel) and their alloys; metal oxides from groups 1 to 16 in the periodic table (such as titanium oxide, zinc oxide, aluminum oxide, chromium oxide, manganese oxide, molybdenum oxide, tungsten oxide, vanadium oxide, tin oxide, iron oxide (including magnetic iron oxide), and indium oxide), metal hydroxides (such as aluminum hydroxide, gold hydroxide, and magnesium hydroxide), metal sulfides (such as copper sulfide, sodium sulfide, lead sulfide, nickel sulfide, and platinum sulfide), metal halides (such as calcium fluoride, tin fluoride, and potassium fluoride), metal carbides (such as calcium carbide, titanium carbide, iron carbide, and sodium carbide), metal nitrides (such as aluminum nitride, chromium nitride, germanium nitride, and cobalt nitride), metal carbonates or metal bicarbonates (such as calcium carbonate (light calcium carbonate), calcium bicarbonate, sodium bicarbonate (baking soda), and iron carbonate), metal sulfates or metal bisulfates (such as aluminum sulfate, cobalt sulfate, sodium bisulfate, copper sulfate, nickel sulfate, and barium sulfate), and other metal salts (such as titanates (barium titanate, magnesium titanate, and potassium titanate), metal borates (such as aluminum borate, and zinc borate), and metal phosphates (calcium phosphate, sodium phosphate). These can be used singly or in combination of two or more. Among them, the inorganic filler constituting the component (B) is preferably calcium carbonate and/or talc, and talc is the most preferred, in view of achieving both the flexibility of the resin hollow particles and the toughness of the cured product when using the component (B).

The resin hollow particle used as the component (B) may be either a synthesized one or a commercially available one. Examples of the method for synthesizing the component (B) include a method including treating (surface-treating) the aforementioned inorganic filler with a silane coupling agent by a known method, and then adhering the inorganic filler treated with the silane coupling agent to the surface of a resin hollow particle.

Specifically, the surface of the inorganic filler can be treated (surface-treated) with a silane coupling agent by a method including injecting such as spraying a silane coupling agent while stirring inorganic fillers (dry method), a method including adding a silane coupling agent diluted with water or an organic solvent while vigorously stirring the inorganic fillers dispersed in a solvent into a slurry state (wet method), for example. Subsequently, the inorganic filler treated with the silane coupling agent can be adhered to the surface of the resin hollow particles by a method including heating the resin hollow particles to a temperature at which they soften and mixing and stirring them with the inorganic filler treated with the silane coupling agent, or a method including colliding the resin hollow particle with the inorganic filler using a jet mill or the like.

An average particle diameter of the resin hollow particles as the component (B) is not particularly limited, but is, for example, 10 to 230 µm, more preferably 80 to 180 µm, and particularly preferably 100 to 150 µm. When the average particle diameter is 10 µm or more, the function as a cushioning material is easily exhibited to easily achieve the intended effects. The average particle diameter of the component (B) can be determined using a particle size distribution analyzer employing analysis methods such as laser diffraction. When the average particle diameter of the component (B) falls within the range, it is possible to obtain a photocurable resin composition that provides a cured product with superior low elasticity.

The content of the component (B) is preferably 1 to 100 parts by mass relative to 100 parts by mass of the component (A), more preferably 3 to 50 parts by mass, particularly preferably 5 to 30 parts by mass, and most preferably 8 to 15 parts by mass. When the component (B) is contained in an amount of 1 to 100 parts by mass, it is possible to maintain a low viscosity of the photocurable resin composition and also obtain a cured product with low elasticity. The resin hollow particles as the component (B) may be used singly or in combination of two or more. It should be noted that when two or more types are used together, the content of the component (B) refers to the total amount.

### <Component (C)>

Component (C) of the present invention is a photoinitiator. As the component (C), a compound can be used that generates radical species by irradiation with active energy rays such as visible light, ultraviolet rays, or electron beams (a photo-radical polymerization initiator). Examples of the photoinitiator include an acetophenone-based photoinitiator, a benzoin-based photoinitiator, a benzophenone-based photoinitiator, a thioxanthone-based photoinitiator, an acylphosphine oxide-based photoinitiator, and a titanocene-based photoinitiator. Among them, the component (C) is preferably an acetophenone-based photoinitiator and/or an acylphosphine oxide-based photoinitiator, and an acetophenone-based photoinitiator is more preferable, because it is possible to obtain a photocurable resin composition that cures rapidly even with a low integrated light quantity. These can be used singly or in combination of two or more.

Examples of the acetophenone-based photoinitiator include, but are not limited to, diethoxyacetophenone, 2-hydroxy-2-methyl-1-phenyl-propan-1-one, benzyl dimethyl ketal, 4-(2-hydroxyethoxy)phenyl-(2-hydroxy-2-propyl)ketone, 1-hydroxy-cyclohexyl-phenyl-ketone, 2-methyl-2-morpholino(4-thiomethylphenyl)propan-1-one, 2-benzyl-2-dimethylamino-1-(4-morpholinophenyl)butanone, and 2-hydroxy-2-methyl-1-[4-(1-methylvinyl)phenyl]propanone oligomer. These can be used singly or in combination of two or more.

Examples of commercially available acetophenone-based photoradical polymerization initiators include Omnirad (R) 184, Omnirad (R) 1173, Omnirad (R) 2959, Omnirad (R) 127 (manufactured by IGM Resins B.V.), ESACURE (R) KIP-150 (manufactured by IGM Resins B.V.), and Doublecure 173 (manufactured by Double Bond Chemical Ind., Co., Ltd.).

The content of the component (C) is preferably 0.1 to 10 parts by mass relative to 100 parts by mass of the component (A), more preferably 0.5 to 7 parts by mass, and particularly preferably 1 to 5 parts by mass. When the content of the component (C) is 0.1 to 10 parts by mass, it is possible to maintain good curability without the influence of the addition of the component (B). The photoinitiators as the component (C) may be used singly or in combination of two or more. It should be noted that when two or more types are used together, the content of the component (C) refers to the total amount.

### <Component (D)>

The photocurable resin composition according to the present invention preferably further contains a plasticizer as component (D). It should be noted that the plasticizer contained in the photocurable resin composition according to the present invention is also simply referred to as "the component (D) of the present invention" or simply as "the component (D)". In view of obtaining a cured product with low elasticity, The photocurable resin composition preferably contains a plasticizer that does not have a reactive functional group. Examples of the reactive functional group here include a (meth)acryloyl group, a vinyl group, an epoxy group, a glycidyl group, and an alkoxysilyl group. In view of compatibility with the component (A) and low elasticity of the cured product, it is preferable to use a plasticizer containing a polyether skeleton as the component (D). It should be noted that the term "containing a polyether skeleton" as used herein means that the compound contains repeating units of alkylene oxide such as polyethylene oxide, polypropylene oxide, or polybutylene oxide in a skeleton. The number of carbons constituting the alkylene oxide is not particularly limited, but the number of carbons in one repeating unit is preferably 2 to 10, more preferably 2 to 5, particularly preferably 2 to 4, and most preferably 3. In view of compatibility of the component (D) with other components and low elasticity of the cured product, it is preferable that the component (D) be a plasticizer containing a polypropylene oxide skeleton.

The number of repeating units of alkylene oxide constituting the polyether skeleton is not particularly limited, but is preferably, 3 to 300, more preferably 5 to 100, and particularly preferably 10 to 60, and most preferably 20 to 50.

The number average molecular weight of the component (D) is preferably 500 to 5,000, more preferably 1,000 to 4,000, and most preferably 1,500 to 3,000 in view of balancing curability and low elasticity of the cured product. The number average molecular weight mentioned above has been calculated by the standard polystyrene conversion method involving measurement by gel permeation chromatography (GPC). The solvent used herein is tetrahydrofuran.

Examples of the plasticizer that can be used as the component (D) include a condensate of polyols, such as polyethylene glycol and polypropylene glycol. The plasticizer used as the component (D) may be either a synthesized one or a commercially available one. Examples of the commercial products of the component (D) include, but are not particularly limited to, PEG#300, PEG#400, PEG#600, PEG#1000, PEG#1500, PEG#15400, PEG#2000, PEG#4000, PEG#6000, PEG#1100, PEG#2000, Uniol (R) D-700, D-1000, D1200, D2000, D4000, PB-500, PB-700, PB-1000, PB-2000 (manufactured by NOF Corporation). These can be used singly or in combination of two or more.

The content of the component (D) is preferably 10 to 100 parts by mass relative to 100 parts by mass of the component (A), more preferably 20 to 60 parts by mass, and particularly preferably 30 to 50 parts by mass. When the content of the component (D) is 10 to 100 parts by mass, the thick-film curability can be satisfactorily maintained, and the low elasticity of the cured product can also be satisfactorily maintained. The plasticizers as the component (D) may be used singly or in combination of two or more. It should be noted that when two or more types are used together, the content of the component (D) refers to the total amount.

### <Component (E)>

The photocurable resin composition according to the present invention preferably further contains an inorganic filler as component (E). It should be noted that the inorganic filler contained in the photocurable resin composition according to the present invention (excluding the inorganic filler contained in the component (B)) is also simply referred to as "the component (E) of the present invention" or simply as "the component (E)". The inorganic filler here is different from the inorganic filler adhered to the surface of the component (B), and it is dispersed independently in the photo-curable resin composition. Namely, the inorganic filler as the component (E) is dispersed among other components and does not come into contact with the surface of the resin hollow particles. By dispersing an inorganic filler as the component (E) in the photocurable resin composition, it is possible to obtain a tough cured product while maintaining low elasticity.

Examples of the component (E) include glass, silica, talc, alumina, mica, ceramics, silicone particles, calcium carbonate, aluminum nitride, carbon powder, kaolin clay, dried clay minerals, and dried diatomaceous earth. In view of the toughness of the cured product, it is preferable that the component (E) contain an inorganic filler different from the inorganic filler adhered to the surface of the component (B). These can be used singly or in combination of two or more. Among them, silica is preferred, and fumed silica is more preferred, in view of not reducing the photocurability of the photocurable resin composition. In one embodiment, it is preferable in the photocurable resin composition according to the present invention that the inorganic filler contained as the component (B) be talc, and that the inorganic filler contained as the component (E) be fumed silica.

In view of suppressing the increase in viscosity and the decrease in photocurability of the photocurable resin composition, it is preferable that the component (E) be surface-treated with at least one compound selected from the group consisting of a fatty acid, a silane compound, and silicone oil. It is preferable that among the above, the component (E) be fumed silica surface-treated with silicone oil, and it is particularly preferable that it be fumed silica surface-treated with dimethyl silicone oil.

The primary particle diameter of the component (E) is preferably 1 to 500 nm, more preferably 3 to 300 nm, and particularly preferably 5 to 50 nm. When the primary particle diameter is 1 to 500 nm, it is possible to maintain good photocurability. The primary particle diameter here refers to the average particle diameter, which is the arithmetic mean of the particle diameters determined by observation with an electron microscope.

The inorganic filler used as the component (E) may be either a synthesized one or a commercially available one. Examples of the commercial products of the component (E) include, but are not particularly limited to, Aerosil (R) R974, R972, R972V, R972CF, R805, R812, R812S, R816, R8200, RY200, RX200, RY200S, and R202 (manufactured by NIPPON AEROSIL CO., LTD.). These can be used singly or in combination of two or more.

The content of the component (E) is preferably 0.1 to 50 parts by mass relative to 100 parts by mass of the component (A), more preferably 0.5 to 30 parts by mass, and particularly preferably 1 to 5 parts by mass. When the content of the component (E) is 0.1 to 50 parts by mass, it is possible to suppress an increase in viscosity and a decrease in photocurability. The inorganic fillers as the component (E) may be used singly or in combination of two or more. It should be noted that when two or more types are used together, the content of the component (E) refers to the total amount.

### <Component (F)>

The photocurable resin composition according to the present invention may further contain a dispersant (excluding the abovementioned component (A)) as component (F). It should be noted that the dispersant contained in the photocurable resin composition according to the present invention is also simply referred to as "the component (F) of the present invention" or simply as "the component (F)". By including a dispersant, it is possible to uniformly disperse the component (B) and the optional component (E), thereby obtaining a cured product with superior low elasticity. The component (F) is not particularly limited as long as it can disperse the component (B) and the optional component (E), and examples thereof include anionic dispersants such as various acids, for example, alkyl sulfonic acids or aryl sulfonic acids such as dioctyl sulfosuccinate or dodecylbenzene sulfonic acid, alkyl ether sulfonic acids or aryl ether sulfonic acids, alkyl sulfates or aryl sulfates such as dodecyl sulfate, alkyl ether sulfates or aryl ether sulfates, alkyl-substituted phosphoric acids or aryl-substituted phosphoric acids, alkyl ether-substituted phosphoric acids or aryl ether-substituted phosphoric acids, N-alkyl sarcosine acids or aryl sarcosine acids such as dodecyl sarcosine acid, alkyl carboxylic acids or aryl carboxylic acids such as oleic acid or stearic acid, and alkyl ether carboxylic acids or aryl ether carboxylic acids, and alkali metal salts or ammonium salts of these acids; nonionic dispersants such as alkyl-substituted polyethylene glycol or aryl-substituted polyethylene glycol, polyvinyl alcohol, alkyl-substituted cellulose, and polyvinylpyrrolidone; and dispersants such as derivatives of polyacrylic acid. These can be used singly or in combination of two or more. In view of ensuring good compatibility between the component (F) and the component (A), and uniformly dispersing the component (B), it is preferable to use a nonionic dispersant (nonionic surfactant) as the component (F), and more preferable to use alkyl-substituted polyethylene glycol or aryl-substituted polyethylene glycol.

The content of the component (F) is preferably 0.1 to 10 parts by mass relative to 100 parts by mass of the component (A), more preferably 0.1 to 5 parts by mass, and particularly preferably 0.5 to 3 parts by mass. When the content of the component (D) is 0.1 to 10 parts by mass, it is possible to obtain a cured product with excellent low elasticity and maintain good storage stability. The dispersants as the component (F) may be used singly or in combination of two or more. It should be noted that when two or more types are used together, the content of the component (F) refers to the total amount.

### <Other optional components>

Furthermore, the photocurable resin composition according to the present invention may contain an appropriate amount of additives such as an organic filler other than the component (B), a silane coupling agent, a light stabilizer, a photosensitizer, a polymerization inhibitor, and a colorant as long as these do not impair the characteristics of the present invention, or the photocurable resin composition may not contain the additives.

Examples of the organic filler other than the component (B) include powders of organic substances composed of rubber, elastomers, plastics, or polymers (or copolymers). These can be used singly or in combination of two or more. Other examples of the organic filler include organic fillers with a multilayer structure such as core-shell type fillers. The preferred average particle diameter of the organic filler is in the range of 0.05 to 50 µm. In view of improving characteristics in durability tests, it is preferable that the organic filler be a filler made of polymers or copolymers of acrylic acid esters and/or (meth)acrylic acid esters, or fillers made of polymers or copolymers of styrene compounds. In view of photocurability, the suitable amount of the organic filler added (content of the organic filler) is preferably 1 to 50 parts by mass relative to 100 parts by mass of the component (A), more preferably 5 to 30 parts by mass. It should be noted that when two or more types are used together, the content of the organic filler refers to the total amount.

Examples of the silane coupling agent include epoxy group-containing silane coupling agents such as 3-glycidoxypropyltrimethoxysilane, 3-glycidoxypropylmethyldimethoxysilane, 3-glycidoxypropylmethyldiethoxysilane, 3-glycidoxypropylmethyldipropyloxysilane, 3-glycidoxypropyldimethylmonomethoxysilane, 3-glycidoxypropyldimethylmonoethoxysilane, 3-glycidoxypropyldimethylmonopropyloxysilane, 2-(3,4-epoxycyclohexyl)ethyltrimethoxysilane, 3-glycidoxypropyltriethoxysilane, 3-glycidoxypropyltrimethoxysilane, and 3-glycidoxypropylmethyldiethoxysilane; vinyl group-containing silane coupling agents such as vinyltris(2-methoxyethoxy)silane, vinyltriethoxysilane, and vinyltrimethoxysilane; (meth)acryloyl group-containing silane coupling agents such as 3-methacryloxypropylmethyldimethoxysilane, 3-methacryloxypropylmethyldiethoxysilane, 3-methacryloxypropyldimethylmonomethoxysilane, 3-methacryloxypropyldimethylmonoethoxysilane, 3-acryloxypropylmethyldipropyloxysilane, 3-acryloxypropylmethyldimethoxysilane, 3-acryloxypropylmethyldiethoxysilane, 3-acryloxypropylmethyldipropyloxysilane, 3-acryloxypropyldimethylmonopropyloxysilane, 3-acryloxypropyldimethylmonomethoxysilane, 3-acryloxypropyltrimethoxysilane, 3-acryloxypropyldimethylmonoethoxysilane, 3-acryloxypropyldimethylmonopropyloxysilane, and 3-methacryloxypropyltrimethoxysilane; amino group-containing silane coupling agents such as N-(2-aminoethyl)-3-aminopropyltrimethoxysilane, 3-aminopropyltriethoxysilane, and N-phenyl-3-aminopropyltrimethoxysilane; 3-sulfanylpropyltrimethoxysilane and 3-chloropropyltrimethoxysilane. Among them, (meth)acryloyl group-containing silane coupling agents are more preferable, in view of improving adhesion to the adherend. These can be used singly or in combination of two or more. The preferred range of the amount of the silane coupling agent added (content of the silane coupling agent) is 0.1 to 20 parts by mass relative to 100 parts by mass of the component (A). It should be noted that when two or more types are used together, the content of the silane coupling agent refers to the total amount.

Examples of the light stabilizer include ultraviolet absorbers and radical scavengers. Specific examples of the light stabilizer include bis(2,2,6,6-tetramethyl-4-piperidyl)sebacate, bis(1,2,2,6,6-pentamethyl-4-piperidyl)sebacate, 4-benzoyloxy-2,2,6,6-tetramethylpiperidine, 1-[2-[3-(3,5-di-tert-butyl-4-hydroxyphenyl)propionyloxy]ethyl]-4-[3-(3,5-di-tert-butyl-4-hydroxyphenyl)propionyloxy]-2,2,6,6-tetramethylpiperidine, 1,2,2,6,6-pentamethyl-4-piperidinyl-methacrylate, bis(1,2,2,6,6-pentamethyl-4-piperidinyl)[[3,5-bis(1,1-dimethylethyl)-4-hydroxyphenyl]methyl]butyl malonate, decanedioic acid bis(2,2,6,6-tetramethyl-1(octyloxy)-4-piperidinyl)ester, a reaction product of 1,1-dimethylethyl hydroperoxide and octane, N,N',N",N"'-tetrakis-(4,6-bis-(butyl-(N-methyl-2,2,6,6-tetramethylpiperidin-4-yl)amino)-triazine-2-yl)-4,7-diazadecane-1,10-diamine, a condensation product of dibutylamine-1,3,5-triazine-N,N'-bis(2,2,6,6-tetramethyl-4-piperidyl)-1,6-hexamethylenediamine and N-(2,2,6,6-tetramethyl-4-piperidyl)butylamine, poly[[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino]], a condensation product of dimethyl succinate and 4-hydroxy-2,2,6,6-tetramethyl-1-piperidineethanol, 2,2,4,4-tetramethyl-20-((3-lauryloxycarbonyl)ethyl-7-oxa-3,20-diazadispiro[5.1.11.2]heneicosane-21-one, β-alanine, N-(2,2,6,6-tetramethyl-4-piperidinyl)-dodecyl ester/tetradecyl ester, N-acetyl-3-dodecyl-1-(2,2,6,6-tetramethyl-4-piperidinyl)pyrrolidine-2,5-dione, 2,2,4,4-tetramethyl-7-oxa-3,20-diaza-dispiro[5,1,11,2]heneicosane-21-one, 2,2,4,4-tetramethyl-21-oxa-3,20-diazadicyclo[5,1,11,2]henicosan-20-propanoic acid dodecyl ester/tetradecyl ester, propanedioic acid-[(4-methoxyphenyl)-methylene]-bis(1,2,2,6,6-pentamethyl-4-piperidinyl)ester, higher fatty acid esters of 2,2,6,6-tetramethyl-4-piperidinol, 1,3-benzenedicarboxamide, hindered amine-based compounds such as N,N'-bis(2,2,6,6-tetramethyl-4-piperidinyl); benzophenone-based compounds such as octabenzone; benzotriazole-based compounds such as 2-(2H-benzotriazol-2-yl)-4-(1,1,3,3-tetramethylbutyl)phenol, 2-(2-hydroxy-5-methylphenyl)benzotriazole, 2-[2-hydroxy-3-(3,4,5,6-tetrahydrophthalimide-methyl)-5-methylphenyl]benzotriazole, 2-(3-tert-butyl-2-hydroxy-5-methylphenyl)-5-chlorobenzotriazole, 2-(2-hydroxy-3,5-di-tert-pentylphenyl)benzotriazole, a reaction product of methyl3-(3-(2H-benzotriazol-2-yl)-5-tert-butyl-4-hydroxyphenyl)propionate and polyethylene glycol, and 2-(2H-benzotriazol-2-yl)-6-dodecyl-4-methylphenol; benzoate-based compounds such as 2,4-di-tert-butylphenyl-3,5-di-tert-butyl-4-hydroxybenzoate; and triazine-based compounds such as 2-(4,6-diphenyl-1,3,5-triazine-2-yl)-5-[(hexyl)oxy]phenol. These can be used singly or in combination of two or more.

The photosensitizer is not particularly limited, and examples thereof include thioxanthone-based compounds, benzophenone-based compounds such as 4,4'-bis(diethylamino)benzophenone, anthraquinone-based compounds, and coumarin-based compounds. Among these, preferred are thioxanthone-based compounds such as 2,4-diethylthioxanthone, 2,4-dimethylthioxanthone, 2,4-dichlorothioxanthone, 1-chloro-4-propoxy-thioxanthone, 2-chlorothioxanthone, and 2-isopropylthioxanthone; and 4,4'-dialkylaminobenzophenones such as Michler's ketone (4,4'-bis(dimethylamino)benzophenone) and 4,4'-bis(diethylamino)benzophenone. Among them, 2,4-diethylthioxanthone, 2-isopropylthioxanthone, and 4,4'-bis-(diethylamino)benzophenone are particularly preferred, in view of performance, safety and availability. These can be used singly or in combination of two or more.

The polymerization inhibitor is not particularly limited, and examples thereof include phenol-based polymerization inhibitors such as p-methoxyphenol, 2,5-di-tert-butyl-4-methylphenol, 2,6-di-tert-butyl-4-methylphenol, 4,4'-thiobis(3-methyl-6-tert-butylphenol), 2,2'-methylenebis(4-methyl-6-tert-butylphenol), and 4-methoxynaphthol; hydroquinone-based polymerization inhibitors such as hydroquinone and 2,6-di-tert-butylhydroquinone; quinone-based polymerization inhibitors such as benzoquinone; free radical-based polymerization inhibitors such as 2,2,6,6-tetramethylpiperidin-1-oxyl free radical and 4-hydroxy-2,2,6,6-tetramethylpiperidin-1-oxyl free radical; nitrobenzene-based polymerization inhibitors such as nitrobenzene and 4-nitrotoluene; and phenothiazine-based polymerization inhibitors such as phenothiazine and 2-methoxyphenothiazine. These can be used singly or in combination of two or more.

The colorant is not particular limited, and examples thereof include inorganic pigments such as carbon black, barium sulfate, alumina white, clay, and titanium oxide; organic pigments such as indanthrone blue, quinacridone red, dioxazine violet, and phthalocyanine blue; fluorescent inorganic pigments such as ZnS:Ag, ZnS:Cu, ZnS:Mn, SrAl₂O₄:Eu, Sr₄Al₁₄O₂₅:Eu, Y₂O₂S:Eu, and Y₂O₃:Eu, fluorescent organic pigments, and dyes. These can be used singly or in combination of two or more.

### <Consistency>

The photocurable resin composition according to the present invention is flexible and excels in workability during application. Specifically, the consistency is, for example, more than 123 and 200 or less, preferably 125 or more and 180 or less, and more preferably 130 or more and 150 or less. It should be noted that the consistency is the value measured by the method described in Examples. In general, a higher value of the consistency of a composition means greater flexibility (fluidity) of the composition, resulting in superior workability during application.

### <Smoothness of coating film>

As mentioned above, the photocurable resin composition according to the present invention not only excels in workability during application but also provides a coating film with excellent smoothness. Thus, it can be said that the photocurable resin composition according to the present invention provides further improved workability.

### <Thick-film curability>

The photocurable resin composition according to the present invention also excels in thick-film curability. Thus, when the photocurable resin composition is used as, for example, an adhesive, a sealing agent, a coating agent, or a potting agent, it can be easily cured, which means that the composition exhibits further improved workability. Specifically, the evaluation results of the thick-film curability test by the method described in Examples are, for example, 2.0 mm or more, preferably 2.5 mm or more, and more preferably 3.0 mm or more. There is no particular limitation on the upper limit thereof but it may be, for example, 8.0 mm or less, or 5.0 mm or less.

### <Preferred embodiments>

Hereinafter, the preferred embodiments of the photocurable resin composition according to the present invention is further described in detail. In one embodiment, it is preferable that the photocurable resin composition according to the present invention consist essentially of the above components (A) to (C). In another embodiment, it is preferable that the photocurable resin composition according to the present invention consist essentially of the above components (A) to (D). In yet another embodiment, it is preferable that the photocurable resin composition according to the present invention consist essentially of the above components (A) to (E). In still another embodiment, it is preferable that the photocurable resin composition according to the present invention consist essentially of the above components (A) to (F). In still another embodiment, it is preferable that the photocurable resin composition according to the present invention consist essentially of the above components (A) to (F) and a colorant.

In the above embodiments, "the photocurable resin composition consists essentially of X" means that the total content of X exceeds 99% by mass (upper limit: 100% by mass) based on 100% by mass of the total mass of the photocurable resin composition (relative to the photocurable resin composition). Preferably, the photocurable resin composition consists of X (the total content = 100% by mass). For example, "the photocurable resin composition consists essentially of the above components (A) to (C)" means that the total content of the components (A) to (C) exceeds 99% by mass (upper limit: 100% by mass) based on 100% by mass of the total mass of the photocurable resin composition (relative to the photocurable resin composition), and it is preferable that the photocurable resin composition consist of the components (A) to (C) (the total content = 100% by mass). In another embodiment, it is preferable that the photocurable resin composition consist of the components (A) to (D) (the total content = 100% by mass). In yet another embodiment, it is preferable that the photocurable resin composition consist of the components (A) to (E) (the total content = 100% by mass). In still another embodiment, it is preferable that the photocurable resin composition consist of the components (A) to (F) (the total content = 100% by mass). In still another embodiment, it is preferable that the photocurable resin composition consist of the components (A) to (F) and a colorant (the total content = 100% by mass).

It should be noted, in each of the above embodiments, the preferred contents of the components (A) to (F) can be determined with reference to the respective content ranges described in the sections for those components, and the preferred ranges may be selected and combined as desired.
embodiments, and the preferred ranges can be selected and combined accordingly.

### <Method for producing photocurable resin composition>

The photocurable resin composition can be produced by conventionally known methods. For example, predetermined amounts of the components (A) to (C), the optional components (D) to (F), and other optional components can be weighed and mixed using a mixing means such as a mixer to obtain the photocurable resin composition according to the present invention. At this time, production conditions are not particularly limited, but it is preferable to carry out under light-shielded conditions to prevent an increase in viscosity. The photocurable resin composition according to the present invention can also be produced by mixing each component preferably at a temperature of 10 to 70°C for preferably 0.1 to 5 hours. In one embodiment, the photocurable resin composition according to the present invention can be produced by weighing predetermined amounts of the components (A), (B), and (D), stirring them, then adding and mixing the components (E) and (F) therewith, and finally adding and mixing the component (C) with the resultant under light-shielded conditions. It should be noted that when the resin hollow particles and the inorganic filler, each of which constitutes the component (B), are individually mixed with the component (A) and the like, they do not disperse uniformly. Thus, it is preferable to prepare the resin hollow particles as the component (B) in advance and then mix them with the other components (the components (A) and (C), the optional components (D) to (F), and any other components described above).

### <Cured product>

Another aspect of the present invention also provides a cured product obtained by curing the above-mentioned photocurable resin composition.

A method for curing the photocurable resin composition according to the present invention to obtain a cured product is not particularly limited and can be appropriately selected depending on the intended use. As an example, there is a method including applying the photocurable resin composition to an adherend to form a coating film (application method/step), and curing the coating film (curing method/step). Hereinafter, such a method will be described, but the method for obtaining the cured product according to the present invention is not limited to the method described below and can be appropriately modified.

### <Application method/step>

As a method for applying the photocurable resin composition to an adherend, known methods for applying a sealing agent or adhesive can be used. For example, methods involving use of an automatic applicator can be used, including dispensing, spraying, inkjet printing, screen printing, gravure printing, dipping, and spin coating.

### <Curing method/step and cured product>

The photocurable resin composition can be cured by irradiating it with light (for example, active energy rays such as ultraviolet rays or visible light). Here, the light refers to light in a broad sense that includes various types of active energy rays, and specific examples include radiation like α rays and β rays, electromagnetic waves like γ rays and X-rays, electron beams, ultraviolet rays with wavelengths of 100-400 nm, and visible light with wavelengths of 400-750 nm. A suitable integrated light quantity to achieve low elasticity of the cured product is preferably 0.5 to 50 kJ/m², more preferably 1 to 40 kJ/m², and particularly preferably 5 to 30 kJ/m².

### <Storage modulus>

The cured product obtained by curing the photocurable resin composition according to the present invention exhibits excellent flexibility. Thus, the cured product is useful as a cushioning material for components or parts (i.e., adherends) to which a stress is applied. Specifically, the storage modulus of the cured product is, for example, 300,000 Pa or less, preferably 260,000 Pa or less, and more preferably 230,000 Pa or less. The lower limit thereof is not particularly limited, and the storage modulus is, for example, 200,000 Pa or more, 180,000 Pa or more, or 150,000 Pa or more. It should be noted that the aforementioned storage modulus is the storage modulus of the cured product obtained by irradiating the photocurable resin composition with ultraviolet rays at integrated light quantity of 30 kJ/m². More specifically, the storage modulus is the value measured by the method described in Examples. Thus, in one embodiment, the cured product obtained by irradiating and curing the photocurable resin composition according to the present invention with ultraviolet rays at integrated light quantity of 30 kJ/m² preferably has a storage modulus at 25°C of 300,000 Pa or less, more preferably 260,000 Pa or less, and particularly preferably 230,000 Pa or less.

### <Use>

The photocurable resin composition of the present invention can be used in various fields such as the automotive, electrical and electronic component, construction material and architectural, and aerospace fields. It is particularly suitable for use as an adhesive, a sealing agent, a coating agent or a potting agent that requires low elasticity of cured products; in other words, it is suitable for use as an adhesive, a sealing agent, or a potting agent for adherends or parts to which a stress is applied.

### Examples

Hereinafter, the present invention will be described in further detail with reference to Examples, but the present invention is not limited to these Examples. Unless otherwise specified, procedures, tests, and the like were conducted at 25°C and 55% RH.

### [Examples 1 to 3 and Comparative Examples 1 to 4]

The following components were provided to prepare the composition.
(A-1): Polyether-based, monofunctional urethane-modified acrylate oligomer (the number of functional groups: 1, weight average molecular weight: 20,000)
(A-2): Ethoxy diethylene glycol monoacrylate (the number of functional groups: 1, molecular weight: 188.2), product name: ETERMER (R) 211DS (manufactured by Eternal Chemical Co., Ltd.)
(A-3): Mixture of 60% dipentaerythritol hexaacrylate (the number of functional groups: 6, molecular weight: 578.6) and 40% dipentaerythritol monohydroxy pentaacrylate (the number of functional groups: 5, molecular weight: 524.5), product name: KAYARAD (R) DPHA (manufactured by Nippon Kayaku Co., Ltd.)
(B-1): Resin hollow particles 1: hollow particles (average particle diameter: 120 µm) of resin (copolymer containing acrylonitrile as a constituent unit) having talc adhered to the surface thereof, the talc being surface-treated with 3-methacryloxypropyltriethoxysilane
(B-2): Resin hollow particles 2: hollow particles (average particle diameter: 120 µm) of resin (copolymer containing acrylonitrile as a constituent unit) having talc adhered to the surface thereof, the talc being surface-treated with 3-methacryloxypropyltrimethoxysilane
(B-3): Resin hollow particles 3: hollow particles (average particle diameter: 120 µm) of resin (copolymer containing acrylonitrile as a constituent unit) having talc adhered to the surface thereof, the talc being surface-treated with 3-acryloxypropyltrimethoxysilane
(B'-1): Resin hollow particles 4: hollow particles (average particle diameter: 120 µm) of resin (copolymer containing acrylonitrile as a constituent unit) having untreated calcium carbonate adhered to the surface thereof
(B'-2): Resin hollow particles 5: hollow particles (average particle diameter: 120 µm) of resin (copolymer containing acrylonitrile as a constituent unit) having untreated talc adhered to the surface thereof
(C): 2-Hydroxy-2-methyl-1-phenyl-propan-1-one, product name: DOUBLECURE (R) 173 (manufactured by DOUBLE BOND CHEMICAL IND. CO., LTD.)
(D): Polypropylene glycol, product name: UNIOL (R) D2000 (manufactured by NOF CORPORATION), number average molecular weight 2,000
(E): Fumed silica surface-treated with dimethyl silicone oil (primary particle diameter: 12 nm), product name: AEROSIL (R) RY200 (manufactured by Nippon Aerosil Co., Ltd.)
(F-1): Non-ionic surfactant, product name: SN DISPERSANT 9228 (manufactured by SAN NOPCO LIMITED)
(F-2): Cationic surfactant, product name: NOPCOSPERSE (R)-092 (manufactured by SAN NOPCO LIMITED)
(F-3): Phosphate ester-containing surfactant, product name: DISPERBYK (R)-111 (manufactured by BYK Japan KK).

The components (A) and (D) were weighed and put in a stirring container. The component (B) was added thereto, and the resultant was stirred with a mixer for 30 minutes. Furthermore, the components (E) and (F) were added thereto, and the resultant was stirred for 10 minutes. Finally, the component (C) was added thereto under light-shielding conditions and the mixture was stirred for 30 minutes. The detailed amounts for preparation (amounts added, contents in the composition) are as described in Table 1, and all numerical values are expressed in terms of parts by mass.

### [Storage modulus]

The composition was cured by ultraviolet irradiation at an intensity of 100 mW/cm² for 30 seconds (integrated light quantity: 30 kJ/m²) with an LED irradiation device on a dynamic viscoelasticity measuring device (rotational rheometer, manufactured by Thermo Fisher Scientific Inc., MARS-3 CTC), to obtain a cured product. For the cured product, the storage modulus was measured (n=3) under the measurement conditions of 25°C, plate diameter: 10 mm, gap between plates: 1 mm, frequency: 1 Hz, strain amount: 0.7%, and the average value was calculated.

### <Acceptance criteria> 260,000 Pa or less.

### <Consistency>

The composition was subjected to measurement at 25°C and 55% RH according to JIS K2220: 2013.

### <Acceptance criteria> Pass: 100 or more.

### [Smoothness of coating film]

Using a 1 mm spacer, a 50 cm × 50 cm sheet (coating film of the composition) was prepared, and the state of the coating film surface before curing was visually inspected.

### <Acceptance criteria>

Pass: the surface of the coating film is smooth and free of irregularities
Fail: the surface of the coating film is not smooth and has irregularities.

### [Thick-film curability]

The composition was poured to a depth of 10 mm in a glass container with a diameter of 2 cm, and in that state, the composition was irradiated with ultraviolet rays (wavelength: 365 nm) using a belt conveyor-type irradiator equipped with a high-pressure mercury lamp to achieve an integrated light quantity of 30 kJ/m². The uncured material was wiped off, and the thickness of the cured material was measured with a caliper. The value is shown as "thick-film curability (mm)".

### <Acceptance criteria> Pass: 2.0 mm or more, preferably 2.5 mm or more

It should be noted that when the smoothness of the coating film failed to meet the acceptance criteria, the composition was excluded from the measurement target because it was difficult to accurately measure the thick-film curability.

**[Table 1]**

| | | Example 1 | Example 2 | Example 3 | Comparative Example 1 | Comparative Example 2 | Comparative Example 3 | Comparative Example 4 |
|---|---|---|---|---|---|---|---|---|
| A-1 | Monofunctional urethane-modified acrylate | 56.8 | 56.8 | 56.8 | 56.8 | 56. 8 | 56.8 | 56.8 |
| A-2 | EM211DS | 40.6 | 40.6 | 40.6 | 40.6 | 40.6 | 40.6 | 40.6 |
| A-3 | DPHA | 2.6 | 2.6 | 2.6 | 2.6 | 2.6 | 2.6 | 2.6 |
| B-1 | Resin hollow particles 1 | 10.7 | | | | | | |
| B-2 | Resin hollow particles 2 | | 10.7 | | | | | |
| B-3 | Resin hollow particles 3 | | | 10.7 | | | | |
| B'-1 | Resin hollow particles 4 | | | | 16.2 | | | |
| B'-2 | Resin hollow particles 5 | | | | | 10.7 | 10.7 | 10.7 |
| C | DOUBLECURE 173 | 2.4 | 2.4 | 2.4 | 2.4 | 2.4 | 2.4 | 2.4 |
| D | UNIOL D-2000 | 40.6 | 40.6 | 40.6 | 40.6 | 40.6 | 40.6 | 40.6 |
| E | AEROSIL RY200 | 3.9 | 3.9 | 3.9 | 3.9 | 3.9 | 3.9 | 3.9 |
| F-1 | SN DISPERSANT 9228 | 1.5 | 1.5 | 1.5 | 1.5 | 1.5 | | |
| F-2 | NOPCOSPERSE 092 | | | | | | 1.5 | |
| F-3 | BYK-111 | | | | | | | 1.5 |
| Storage modulus (Pa) | | 228000 | 237120 | 231358 | 431000 | 311000 | 317990 | 305760 |
| Consistency | | 131 | 129 | 128 | 88 | 123 | 119 | 120 |
| Smoothness of coating film | | Pass | Pass | Pass | Fail | Fail | Fail | Fail |
| Thick-film curability (mm) | | 3.1 | 3.1 | 3.1 | 1.9 | Unmeasured | Unmeasured | Unmeasured |

As shown in Table 1, Examples 1 to 3 are photocurable resin compositions with high consistency and excellent smoothness of the coating film, resulting in good workability. Furthermore, the photocurable resin compositions of Examples 1 to 3 also excel in thick-film curability, allowing for the obtainment of a cured product with low storage modulus and flexibility. On the other hand, Comparative Example 1, which used resin hollow particles having untreated calcium carbonate adhered thereto, had low consistency and lacked smoothness after application, resulting in poor workability. Furthermore, the cured product in Comparative Example 1 was also inferior in thick-film curability and storage modulus, as compared to Examples 1 to 3. In Comparative Example 2, which used resin hollow particles having untreated talc adhered thereto, the consistency was high, but irregularities were observed in the coating film after application. Due to the occurrence of irregularities, the thick-film curability could not be measured, and thus the thick-film curability of Comparative Example 2 was not measured. In Comparative Examples 3 and 4, a dispersant different from that in Comparative Example 2 was used to disperse the component (B). Comparative Examples 3 and 4 had high consistency, similar to Comparative Example 2, but irregularities were observed in the coating film after application. From this, it can be understood that the mere presence of a dispersant in the composition is insufficient to improve workability during application or to yield a cured product with low elasticity, but that adherence of an inorganic filler treated with a silane coupling agent having a (meth)acryloyl group to the surface of the resin hollow particles contributes to achieving the workability of the photocurable resin composition and low elasticity of the cured product.

### Industrial Applicability

The photocurable resin composition according to the present invention has high consistency and excellent smoothness of the coating film after application, resulting in good workability. Furthermore, the photocurable resin composition of the present invention is capable of forming thick cured films, and yielding a flexible cured product with a low storage modulus after curing. Thus, the photocurable resin composition of the present invention is useful in various fields as an adhesive, a sealing agent, a coating agent, or a potting agent used for parts to which a stress is applied.

This application is based on Japanese Patent Application No. 2023-81354, filed on May 17, 2023, the disclosure of which is incorporated herein by reference in its entirety.

## Claims

1. A photocurable resin composition comprising components (A) to (C) below:
(A) a compound having one or more (meth)acryloyl groups per molecule;
(B) a resin hollow particle having an inorganic filler adhered to a surface thereof, the inorganic filler being treated with a silane coupling agent having a (meth)acryloyl group; and
(C) a photoinitiator.

2. The photocurable resin composition according to claim 1, wherein the component (A) contains a monofunctional oligomer.

3. The photocurable resin composition according to claim 1 or 2, wherein the component (A) contains a (meth)acrylic monomer.

4. The photocurable resin composition according to claim 1 or 2, wherein in the component (B), the inorganic filler is talc.

5. The photocurable resin composition according to claim 1 or 2, wherein in the component (B), the silane coupling agent is at least one compound selected from the group consisting of 3-methacryloxypropyltrimethoxysilane, 3-methacryloxypropyltriethoxysilane, and 3-acryloxypropyltrimethoxysilane.

6. The photocurable resin composition according to claim 1 or 2, further comprising a plasticizer as component (D).

7. The photocurable resin composition according to claim 1 or 2, further comprising an inorganic filler different from the inorganic filler adhered to the surface of the resin hollow particle of the component (B), as component (E).

8. The photocurable resin composition according to claim 1 or 2, wherein the component (A) contains a monofunctional oligomer, a monofunctional (meth)acrylate monomer, and a polyfunctional (meth)acrylate monomer.

9. The photocurable resin composition according to claim 8, wherein the polyfunctional (meth)acrylate monomer contains a penta-functional (meth)acrylate monomer and/or a hexa-functional (meth)acrylate monomer.

10. The photocurable resin composition according to claim 1 or 2, wherein the component (A) contains a monofunctional urethane-modified (meth)acrylate oligomer having a polyether skeleton.

11. The photocurable resin composition according to claim 1 or 2, wherein
the component (A) contains a polyfunctional (meth)acrylate monomer, and
a content of the polyfunctional (meth)acrylate monomer is 0.1 to 5% by mass based on a total mass of the component (A).

12. The photocurable resin composition according to claim 1 or 2, wherein in the component (B), the silane coupling agent has an ethoxy group.

13. The photocurable resin composition according to claim 1 or 2, further comprising a dispersant as component (F).

14. The photocurable resin composition according to claim 1 or 2, which consists essentially of: the components (A) to (C);
a plasticizer as component (D);
an inorganic filler different from the inorganic filler adhered to the surface of the resin hollow particle of the component (B), as component (E); and
a dispersant as component (F).

15. The photocurable resin composition according to claim 1 or 2, which is substantially free of a polyfunctional (meth)acrylate oligomer.

16. A cured product of the photocurable resin composition according to claim 1 or 2.

17. The cured product according to claim 16, which is obtained by curing the photocurable resin composition with an integrated light quantity of 30 kJ/m², and has a storage modulus at 25°C of 260,000 Pa or less.
